# EUROPÄISCHE PATENTSCHRIFT

(11) **EP 3 153 349 B1**
(45) Veröffentlichungstag und Bekanntmachung des Hinweises auf die Patenterteilung: **25.09.2019**
(21) Anmeldenummer: 16001467.6
(22) Anmeldetag: 27.06.2016
(51) Int. Cl.: B60P 3/20, B60P 7/14

(54) **FAHRZEUGAUFBAU FÜR NUTZFAHRZEUGE MIT EINER TRENNWAND**
VEHICLE BODY FOR A MOTOR VEHICLE WITH A PARTITION
SUPERSTRUCTURE DE VEHICULE POUR VEHICULES UTILITAIRES AYANT UNE PAROI DE SEPARATION

(30) Priorität: 28.09.2015 DE 102015012454
(43) Veröffentlichungstag der Anmeldung: 12.04.2017
(73) Patentinhaber: Fahrzeugwerk Bernard Krone GmbH, 48480 Spelle (DE)
(72) Erfinder: Holbech, Søren, DK - 8883 Gjern (DK); Korsbakke, Keld, DK - 8600 Silkeborg (DK)
(74) Vertreter: Pott, Ulrich

(56) Entgegenhaltungen:
- EP-A1- 2 703 214
- EP-B1- 1 726 477
- DE-A1-102012 110 898
- DE-U1-202012 104 050
- FR-A3- 2 635 737
- GB-A- 2 219 976

## Beschreibung

Die Erfindung bezieht sich auf einen Fahrzeugaufbau für Nutzfahrzeuge mit einem kastenförmigen Laderaum, insbesondere einem zumindest bereichsweise kühlbaren Laderaum, mit zumindest einer verstellbaren Trennwand, die in Führungen des Fahrzeugaufbaus längsverschieblich innerhalb des Laderaumes angeordnet und aus einer im Wesentlichen horizontal ausgerichteten Außerbetriebsstellung in eine im Wesentlichen vertikal ausgerichtete, den Laderaum in voneinander getrennte Laderaumabteile verschwenkte Endbetriebsstellung verschwenkbar ist, wobei in der Endbetriebsstellung der Trennwand diese über Dichtelemente mit Boden- und Dachbereichen sowie Seitenwandbereichen des Fahrzeugaufbaus verbunden ist und wobei die Trennwand aus der Außerbetriebsstellung in eine Zwischenbetriebsstellung verschwenkbar ist, aus der sie über zumindest einen Druckkörper in die Endbetriebsstellung überführbar ist, wobei der Druckkörper über Kraftheber mit einem Bodenbereich oder dem Dachbereich verspannbar ist.

Ein Fahrzeugaufbau der vorgenannten Art ist aus der EP 1 726 477 B1 bekannt. Des Weiteren sind Fahrzeugaufbauten der vorgenannten Art beispielsweise aus dem DE 9013442.7 U1 und der GB 2219976 A bekannt. Diese haben jeweils einen kühlbaren Laderaum, der über eine Trennwand in zumindest zwei Laderaumbereiche trennbar ist. Die Trennwand kann dabei mittels einer Verriegelungsvorrichtung unter Zwischenlage von aufpumpbaren Dichtungsschläuchen verriegelt werden. Damit ist eine weitgehende Luftabdichtung eines Laderaumes zu einem abgetrennten Laderaum ermöglicht. Soll die Trennung aufgehoben werden, ist die Trennwand zu entriegeln und der abgetrennte Bereich ist durch eine Längsverschiebung der Trennwand freizugeben. Hat sich während der Trennung innerhalb der abgetrennten Bereiche des Laderaumes ein unterschiedliches Kühlniveau eingestellt, kann dieses beim Entriegeln und Öffnen der Trennwand Probleme bereiten, da unterschiedliche Drücke in den jeweiligen abgetrennten Bereichen vorherrschen. Dazu sind im Stand der Technik besondere Lüftungsgitter vorgesehen, die die Trennwand von ihrem Bauaufwand her komplizieren und die Verschmutzungsrisiken verursachen. Verschmutzungen müssen jedoch aufgrund gesetzlicher Vorgaben für den Transport von Lebensmitteln sicher minimiert werden.

Des Weiteren sind beim vorbekannten Stand der Technik die Verriegelungsvorrichtungen im Bodenbereich der Trennwand vorgesehen, so dass beim Anheben der Trennwand für einen Verschiebevorgang erhebliche Kräfte aufzuwenden sind. Auch das Schieben der Trennwand und insbesondere auch das Ziehen der Trennwand in Längsrichtung des Fahrzeuges erfordert erhebliche Kraftanstrengungen.

Aus der FR 2 635 737 A3 ist ein Fahrzeugaufbau der eingangs genannten Art bekannt, bei dem ein Bremsklotz vorgesehen ist, der in Richtung eines Bodens zu bewegen ist, um die Trennwand gegen den Boden zu verspannen. Mit diesem Bremsklotz sind jedoch verschiedene Raumabteilungen gegeneinander nicht zu verschließen. Des Weiteren ist mit diesem Bremsklotz ein Druckausgleich zwischen verschiedenen Laderaumabteilungen nicht vorzunehmen.

Es ist Aufgabe der vorliegenden Erfindung, einen Fahrzeugaufbau der eingangs genannten Art dahingehend weiterzubilden, dass eine relativ einfach bauende Trennwand vorgesehen ist, die mit einem verringerten manuellen Kraftaufwand in verschiedene Längspositionen zu verschieben ist und die darüber hinaus unterschiedliche Laderaumabteile sicher abdichtet und einen Druckausgleich zulässt, ohne besondere Verschmutzungsrisiken in Kauf nehmen zu müssen.

Zur Lösung dieser Aufgabe zeichnet sich der Fahrzeugaufbau der eingangs genannten Art dadurch aus, dass dass die Trennwand aus der ein Spaltmaß zum Bodenbereich oder dem Dachbereich des Fahrzeugaufbaus aufweisenden Zwischenbetriebsstellung in die das Spaltmaß schließende Endbetriebsstellung von dem Druckkörper bewegbar ist, wobei der Druckkörper und die Trennwand relativ zueinander translatorisch bewegbar ausgebildet sind und wobei der Druckkörper über Hebel mit der Trennwand verbunden ist, die jeweils einenends mit dem Druckkörper und anderenends an einem Widerlager anliegen, wobei zwischen den jeweiligen Enden eine Abstützung vorgesehen ist, die die Schwenkachse definiert und direkt oder indirekt mit der Trennwand verbunden ist..

Damit ist ein Fahrzeugaufbau mit einer Trennwand geschaffen, die ohne Lüftungsgitter auskommt, die Verschmutzungsrisiken ausgesetzt sind und nur schwer zu reinigen sind. Vielmehr können aufgrund der translatorischen Beweglichkeit der Trennwand, bevorzugtermaßen im Bodenbereich des Fahrzeugaufbaus, ein Vakuum bzw. sonstige Druckdifferenzen ausgeglichen werden, indem in der Zwischenbetriebsstellung der Trennwand diese eine gewisses Spaltmaß zum Bodenbereich bzw. zum Dachbereich des Fahrzeugaufbaus aufweist.

Aufgrund der Relativbeweglichkeit zwischen Trennwand und Druckkörper ist über eine Verspannung des Druckkörpers mit einem Teil des Fahrzeugaufbaus, z. B. mit dem Dach des Fahrzeugaufbaus, die Trennwand in Richtung des Bodens (alternativ zum Dach hin) zu bewegen, wobei aufgrund dieser Relativbewegung das Spaltmaß zu schließen ist, so dass abgetrennte Laderaumbereiche geschaffen werden können, die auch unterschiedlich zu temperieren sind bzw. die unterschiedliche Drücke aufgrund unterschiedlicher Temperaturniveaus aufweisen können. Der Weg der Trennwand zum Boden bzw. zum Dach des Fahrzeugaufbaus hin braucht nur ein geringes Spaltmaß zu überwinden, beispielsweise 15 bis 20 mm, wodurch jedoch ein hinreichender Druckausgleich geschaffen werden kann. Besondere verstellbare Lüftungsgitter zum Druckausgleich, die erhebliche Verschmutzungsrisiken verursachen, sind nicht mehr erforderlich. Zudem reicht dieser Weg aus, um über den Druckkörper die Trennwand sicher mit dem Fahrzeugaufbau zu verspannen und somit im Fahrzeugaufbau zu halten. Dieser geringe Weg kann durch elastische Dichtelemente an der Trennwand ausgeglichen werden. So kann die Trennwand mit ihren Dichtelementen an den jeweiligen oberen und unteren Stirnwandbereichen, aber auch in Seitenwandbereichen aus ihrer Ruhe- bzw. waagerechten Außerbetriebsstellung in die Zwischenbetriebsstellung verschwenkt werden, in der sie schon aufrecht steht. Dabei liegen Dichtelemente der Trennwand bereits an den Innenwandungen der Seitenwände, des Daches und dem Fahrzeugboden an. Gelangt nun der Druckkörper in Bewegung, unterstützt durch die Kraftheber, zum Beispiel in Gestalt von Gasdruckdämpfern oder Gasdruckfedern, wird der Druckkörper gegen das Dach bewegt. Aufgrund dieser Bewegung und den weiteren Kräften der Kraftheber kann dann die Trennwand aufgrund dieser Kraft und auch aufgrund ihres Eigengewichtes gegen den Boden bewegt werden, gleicht dabei das Spaltmaß aus und wird mit dem Dach und dem Boden verspannt. Die Kraftheber oder mit den Krafthebern verbindbare Teile sind dabei an der Trennwand abgestützt. Dichtelemente der Trennwand verlagern aufgrund ihrer Elastizität dabei die Trennwand, um das Spaltmaß auszugleichen.

Dies ist mit baulich einfachen Mitteln zu vollziehen. Da sämtliche Bauteile im Bereich der Schwenkachse der Trennwand gelegen sind, um diese aus der Außerbetriebsstellung in die Endbetriebsstellung zu überführen, und umgekehrt, sind diese Bauteile im Bereich der Schwenkachse der Trennwand ohne große Hebelarme gelegen, so dass die Schwenkbewegung von einer Bedienperson mit geringem manuellen Kraftaufwand zu vollziehen ist.

Der Druckkörper ist bevorzugterweise als Druckplatte ausgebildet und weist bevorzugterweise als Gasdruckdämpfer bzw. -federn ausgebildete Kraftheber auf, die an der Trennwand abgestützt sind. Des Weiteren können Linearführungen vorgesehen sein, um die Relativbewegung zwischen Druckkörper und Trennwand zu führen. Der Druckkörper ist darüber hinaus bevorzugt über Hebel an der Trennwand abgestützt, wobei diese Hebel als Schwenkhebel ausgebildet sind, die einenends mit dem Druckkörper verbunden sind. Mittig sind diese direkt oder indirekt über Ansätze mit der Trennwand verbunden, die die Schwenkachse definieren. Anderenends wirken diese mit Anschlägen zusammen, die die relativ zum Fahrzeug bewegbare Trennwand auf- und abbewegen. Zusätzlich wird das Absenken der Trennwand freigegeben oder die Trennwand wird angehoben. Die planparallel zum Dach ausgerichtete Parkstellung der Trennwand kann durch eine Haltevorrichtung, beispielsweise eine Magnetvorrichtung, unterstützt sein.

Über einen Sperrriegel, bevorzugterweise über einen Sperrhebel, kann der Drucckörper in eine Position gebracht werden, in der der Druckkörper in der Stellung gelegen ist, in der die Trennwand in ihre Außerbetriebsstellung, also ihre Parkstellung zu überführen ist. In dieser Parkstellung ist sie bevorzugterweise waagerecht ausgerichtet, in der sie sich unterhalb des Daches des Fahrzeugaufbaus und planparallel zu diesem erstreckt. Nach Überführung des Schwenkriegels in eine anderweitige Schwenkposition kann die Trennwand in ihrer Endbetriebsstellung verriegelt werden.

Über Längsführungen im Fahrzeugaufbau ist die Trennwand längs zu verschieben, so dass sie an beliebiger Stelle des Fahrzeugaufbaus in ihre Endbetriebsstellung zu überführen ist. Die Längsverschiebung der Trennwand kann erfolgen in ihrer Außerbetriebsstellung, aber auch in Zwischenbetriebsstellungen, in der sie vorzugsweise einen Winkel zwischen 90° und 20° zur Horizontalen einnimmt. Somit ist auch während eines Ladevorgangs die Trennwand nachzujustieren, auch in der 90°-Stellung.

Weitere wesentliche Ausgestaltungen der Erfindung ergeben sich aus weiteren Unteransprüchen, der nachfolgenden Beschreibung und der Zeichnung. In der Zeichnung zeigen:

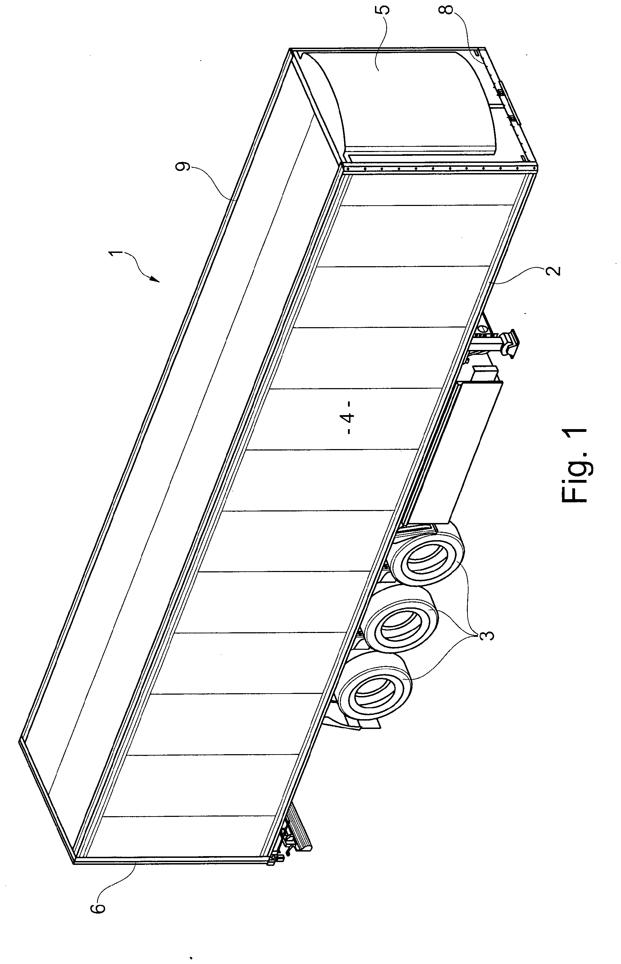

- Fig. 1: in einer perspektivischen Darstellung ein Ausführungsbeispiel eines Fahrzeugaufbaus nach der Erfindung;
- Fig. 2: in einer ebenfalls perspektivischen Darstellung ohne Seitenwandbereiche eine Ansicht auf ein Ausführungsbeispiel eines Fahrzeugaufbaus nach der Erfindung mit einer in der Außerbetriebsstellung dargestellten Trennwand;
- Fig. 3: eine zu Fig. 2 analoge Darstellung mit einer Trennwand in ihrer Endbetriebsstellung mit Darstellung des Sperrriegels in der Zwischenbetriebsstellung mit Spaltmaß zwischen Trennwand und Bodenbereich des Fahrzeugaufbaus;
- Fig. 4: eine zu Fig. 3 analoge Darstellung des Fahrzeugaufbaus mit Trennwand in der Endbetriebsstellung mit verriegeltem Sperrhebel und geschlossenem Spaltmaß;
- Fig. 5: eine zu den Fig. 3 und 4 analoge Darstellung mit Darstellung der Trennwand während ihrer Bewegung aus der Endbetriebsstellung in die Außerbetriebsstellung;
- Fig. 6: eine ausschnittsweise vergrößerte Darstellung der Trennwand mit Sperrriegel in der Entriegelungsposition des Sperrriegels;
- Fig. 7: eine zu Fig. 6 analoge Darstellung mit Darstellung des Sperrriegels in Verriegelungsposition;

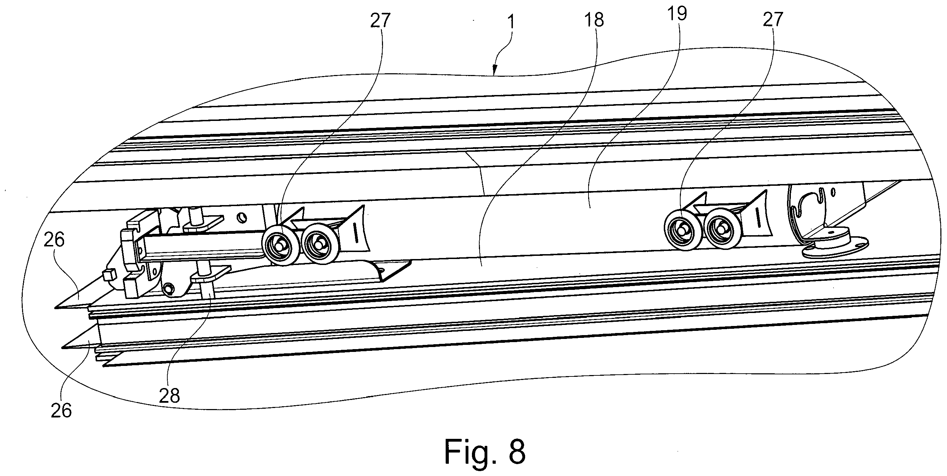

- Fig. 8: ausschnittsweise eine Darstellung auf die Längsführungen des Fahrzeugaufbaus (eines Ausführungsbeispiels) mit den Laufrollen einer Hebekonsole, und
- Fig. 9: Ausführungsbeispiel einer Druckplatte mit oberseitigem Bremselement.

In der Zeichnung sind nur die zum unmittelbaren Verständnis der Erfindung notwendigen Teile und Vorrichtungen gezeigt. Übereinstimmende Teile und Vorrichtungen sind in der Zeichnung mit übereinstimmenden Bezugsziffern versehen.

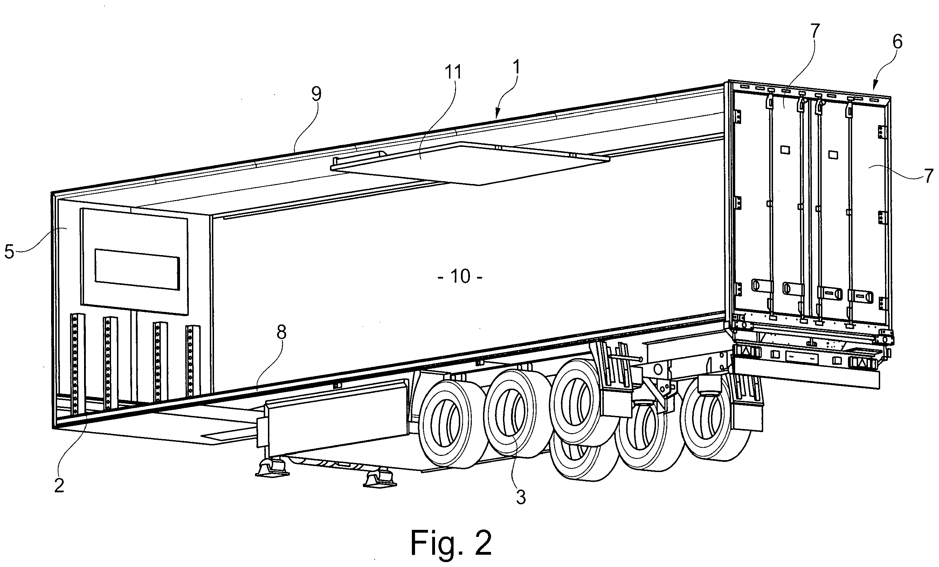

Allgemein mit 1 ist in der Zeichnung ein Fahrzeugaufbau beziffert, der im gezeigten Ausführungsbeispiel als Kühlfahrzeugaufbau ausgebildet sein soll. Dieser weist ein Fahrgestell 2 auf, das über Räder 3 auf dem Erdboden abrollbar abgestützt ist. Der Fahrzeugaufbau 1 hat Seitenwandbereiche 4, eine vordere Wand 5, eine Heckwand 6 mit Hecktüren 7 (Fig. 2), sowie einen Boden 8 und ein Dach 9. Von den Seitenwänden 4, der Vorderwand 6, der Heckwand 6, dem Boden 8 und dem Dach 9 ist ein Laderaum 10 im Inneren des Fahrzeugaufbaus 1 begrenzt, der durch eine Trennwand 11, die sich in Fig. 2 in ihrer geparkten, unterhalb des Daches 9 gelegenen Außerbetriebsstellung befindet, in Laderaumabteile 10.1 und 10.2 unterteilbar ist.

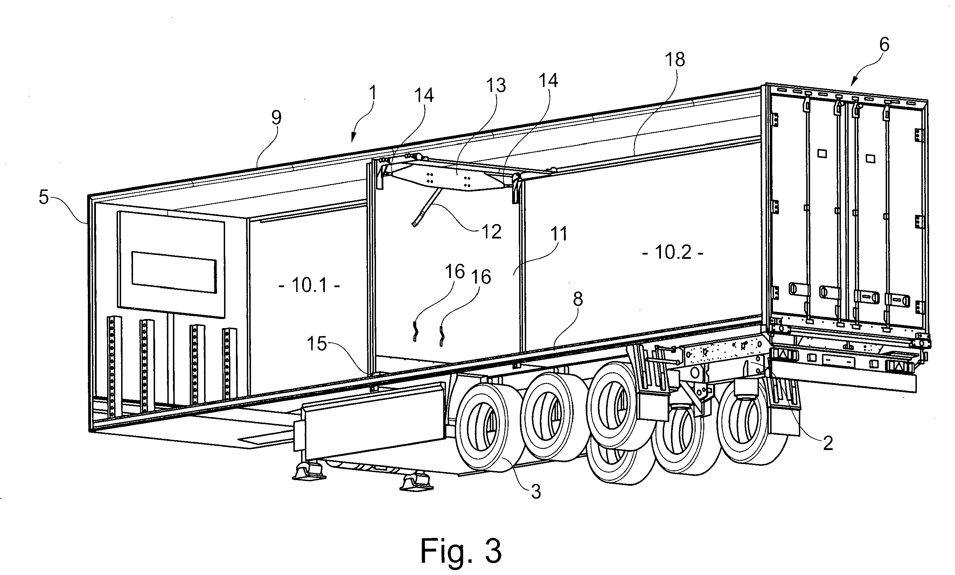

In der zu Fig. 2 analogen Darstellung nach Fig. 3 befindet sich die Trennwand 11 in ihrer herabverschwenkten Zwischenbetriebsstellung, in der sich der Sperrriegel 12 noch in der Entriegelungsstellung befindet. Der Sperrriegel 12 wird mit einem Drucckörper 13 zusammen, der an Hebeln 14 relativ beweglich zur Trennwand 11 gehalten ist und sich in Fig. 3 noch in der herabgesenkten Position befindet, so dass sich zwischen dem Boden 8 und der Trennwand 11 noch ein Spalt 15 ergibt.

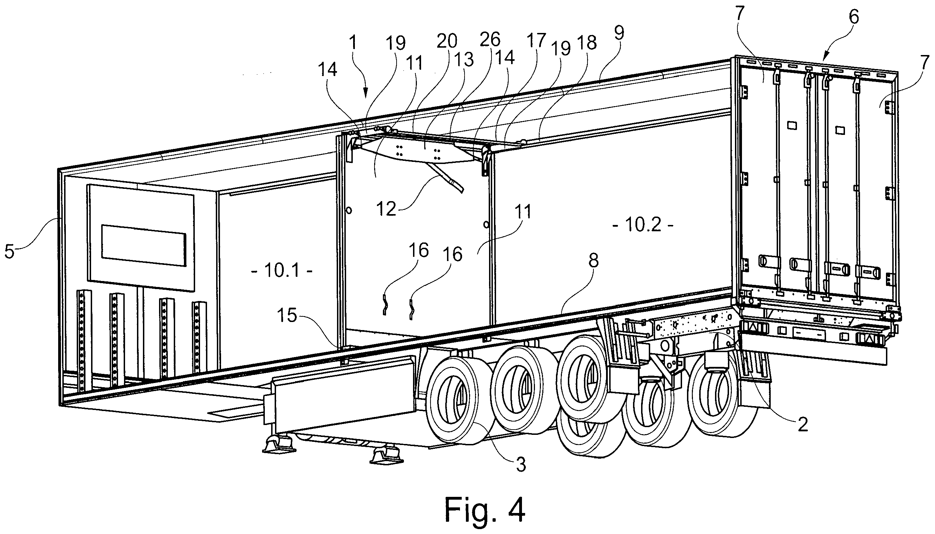

In Fig. 4 ist der Druckkörper in Gestalt einer Druckplatte 13 nach oben bewegt. Der Sperrriegel 12 befindet sich in einer gegen den Uhrzeigersinn verschwenkten Verriegelungsstellung. Die Trennwand 11 ist nach unten bewegt, so dass der Spalt 15 zwischen Trennwand 11 und Boden 8 geschlossen ist. Damit sind die Abteile 10.1 und 10.2 hermetisch voneinander getrennt. Die Schwenkbewegung der Trennwand 11 kann von einer Bedienperson unter Zuhilfenahme der Handgriffe 16 erfolgen. Ist der Spalt 15 geschlossen, kann kein Druckausgleich zwischen den Laderaumabteilen 10.1 und 10.2 erfolgen.

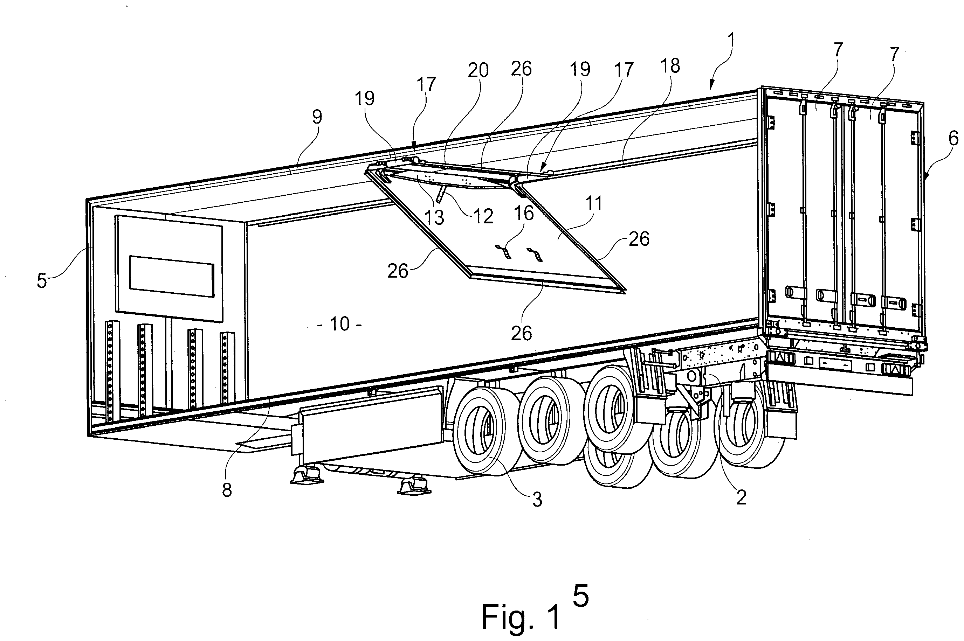

Fig. 5 zeigt eine zu den Fig. 3 und 4 analoge Darstellung, bei der gezeigt ist, wie die Trennwand 11 sich in einer verschwenkten Zwischenposition befindet. Die Trennwand 11 ist an einer Hebekonsole 17 gehalten, die in Führungen 18 des Fahrzeugaufbaus längsverschieblich geführt ist. Dazu sind Laufrollen 27 vorgesehen. Die Hebekonsole 17 weist Rohre 19 auf, die über einen Querstabilisator 20 miteinander verbunden sind.

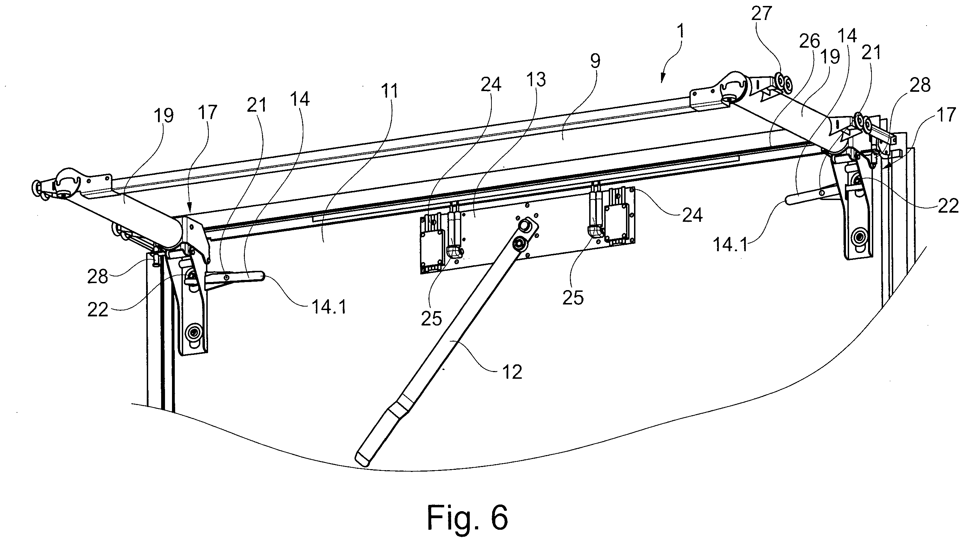

Fig. 6 zeigt vergrößert den Bereich der Trennwand 11 mit dem Druckkörper 13, und den Sperrriegel in Gestalt des Sperrhebels 12, der sich in der Entriegelungsposition befindet. Der Druckkörper 13 ist nur ausschnittsweise dargestellt, so dass seine Hebel 14 nur angedeutet sind. Diese Hebel 14 sind an Ansätzen 21 der Trennwand 11 gelagert, die für die Hebel 14 eine Schwenkachse bilden. Einenends greifen sie bei 14.1 an dem Druckkörper 13 an und sind mit ihrem anderen Ende an einem Widerlager 22 abzustützen. Es sind Linearführungen 24 vorgesehen und Kraftheber 25 in Gestalt von Gasdruckdämpfern, über die der Druckkörper 13 anzuheben ist und mit dem Dach 9 des Fahrzeugaufbaus 1 zu verspannen ist. Bei weiterer Kraftbeaufschlagung ist die Trennwand 11 nach unten zu bewegen und überwindet den Spalt 15. Der entsprechende Längenausgleich wird durch die Dichtungen 26 an der Trennwand 11 ausgeglichen. Die Dichtungen 26 sind im oberen Bereich, d.h. dem Dach 9 zugewandt, aber auch an den Seitenwandbereichen und an der bodenseitigen Stirnwand der Trennwand 11 vorgesehen (wie in Fig. 5 markiert). Der Druckkörper 13 ist relativ zur Trennwand 11 zu bewegen.

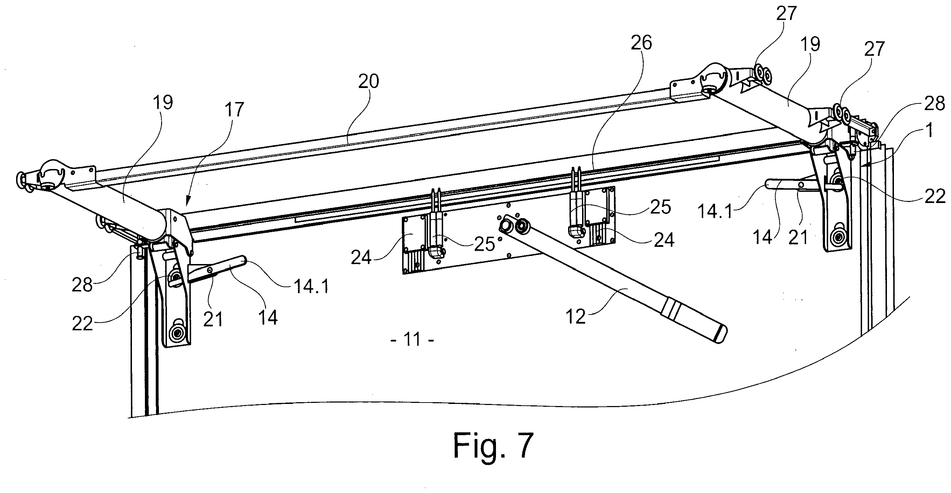

Fig. 7 zeigt ein analoges Ausführungsbeispiel zu Fig. 6 mit dem Unterschied, dass sich hier der Sperrriegel 12 in der Verriegelungsposition befindet. Des Weiteren sind in diesen Figuren die Hebekonsole 17 mit den Rohren 19 sowie die Führungsrollen 27 zur Längsverschiebung der Hebekonsole zu sehen. Des Weiteren können noch Verriegelungsstifte 28 vorgesehen sein, um die Trennwand 11 in einer bestimmten längsverschobenen Position zu halten.

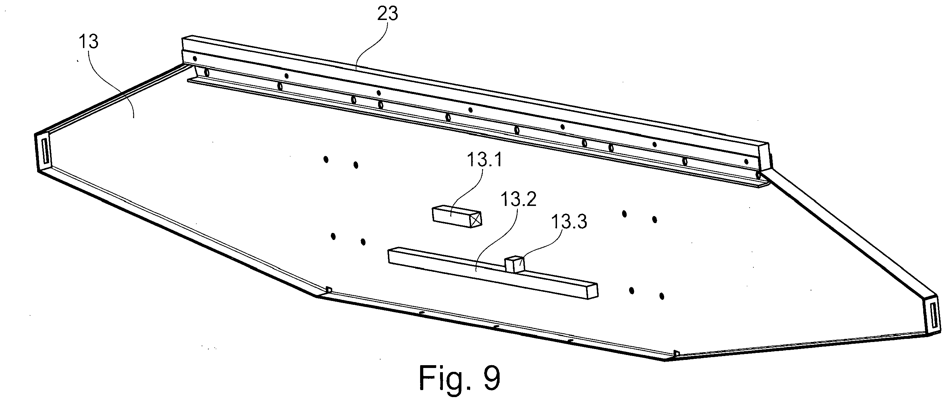

Fig. 9 zeigt die Druckplatte 13 mit dem Bremsklotz 23 als Bremselement zum Verspannen der Druckplatte 13 mit dem Dach des Fahrzeugaufbaus und mit Leisten 13.1, 13.2 und einem Endabschlag 13.3 für Führungskörper aus Sperrriegel 12.

## Patentansprüche

1. Fahrzeugaufbau (1) für Nutzfahrzeuge mit einem kastenförmigen Laderaum (10), insbesondere einem zumindest bereichsweise kühlbaren Laderaum, mit zumindest einer verstellbaren Trennwand (11), die in Führungen (18) des Fahrzeugaufbaus (1) längsverschieblich innerhalb des Laderaumes angeordnet und aus einer im Wesentlichen horizontal ausgerichteten Außerbetriebsstellung in eine im Wesentlichen vertikal ausgerichtete, den Laderaum (10) in voneinander getrennte Laderaumabteile (10.1, 10.2) verschwenkte Endbetriebsstellung verschwenkbar ist, wobei in der Endbetriebsstellung der Trennwand (11) diese über Dichtelemente (26) mit Boden-(8) und Dachbereichen (9) sowie Seitenwandbereichen (4) des Fahrzeugaufbaus (1) verbunden ist, wobei die Trennwand (11) aus der Außerbetriebsstellung in eine Zwischenbetriebsstellung verschwenkbar ist, aus der sie über zumindest einen Drucckörper (13) in die Endbetriebsstellung überführbar ist, wobei der Druckkörper (13) über Kraftheber (25) mit einem Bodenbereich (8) oder dem Dachbereich (9) verspannbar ist, **dadurch gekennzeichnet, dass** die Trennwand (11) aus der ein Spaltmaß (15) zum Bodenbereich (8) oder dem Dachbereich (9) des Fahrzeugaufbaus (1) aufweisenden Zwischenbetriebsstellung in die das Spaltmaß (15) schließende Endbetriebsstellung von dem Druckkörper (13) bewegbar ist, wobei der Druckkörper (13) und die Trennwand (11) relativ zueinander translatorisch bewegbar ausgebildet sind und wobei der Druckkörper (13) über Hebel (14) mit der Trennwand (11) verbunden ist, die jeweils einenends mit dem Druckkörper (13) und anderenends an einem Widerlager (22) anliegen, wobei zwischen den jeweiligen Enden eine Abstützung (21) vorgesehen ist, die die Schwenkachse definiert und direkt oder indirekt mit der Trennwand (11) verbunden ist.

2. Fahrzeugaufbau (1) nach Anspruch 1, **dadurch gekennzeichnet, dass** die Kraftheber (25) als Gasdruckdämpfer oder als Gasdruckfeder ausgebildet sind.

3. Fahrzeugaufbau (1) nach Anspruch 1, **dadurch gekennzeichnet, dass** der Druckkörper (13) über einen Sperrriegel (12) entriegelbar und verriegelbar ist.

4. Fahrzeugaufbau (1) nach Anspruch 3 3, **dadurch gekennzeichnet, dass** der Sperrriegel (12) als schwenkbarer Sperrhebel ausgebildet ist.

5. Fahrzeugaufbau (1) nach einem der Ansprüche 1 bis 4, **dadurch gekennzeichnet, dass** an dem Druckkörper (13) zumindest ein Bremselement (23) angreift.

6. Fahrzeugaufbau (1) nach einem der Ansprüche 1 bis 5, **dadurch gekennzeichnet, dass** die Trennwand (11) jeweils in Seitenbereichen zumindest in dem dem Dach (9) und/oder dem Boden (8) zugewandten Stirnbereichen Dichtelemente (26) aufweist, wobei über zumindest eines der Dichtelemente (26), welches dem Dach (9) oder dem Boden (8) des Fahrzeugaufbaus (1) zugewandt ist, die Relativbewegung der Trennwand (11) zu dem mit dem Dach (9) oder dem Boden (8) verspannten Druckkörper (13) ausgleichbar ist.

7. Fahrzeugaufbau (1) nach einem der Ansprüche 3 bis 6, **dadurch gekennzeichnet, dass** der Sperrriegel (12) an einer Längsschiene (13.1, 13.2) schwenkbeweglich geführt ist, an der eine Rolle geführt ist, die in der Verriegelungsstellung in eine Verriegelungsführung eintaucht und in der Entriegelungsstellung an einem Anschlag (13.3) anliegt.

8. Fahrzeugaufbau (1) nach einem der Ansprüche 1 bis 7, **dadurch gekennzeichnet, dass** an dem Druckkörper (13) Linearführungen (24) vorgesehen sind, in denen der Druckkörper (13) geführt ist und welche an der Trennwand (11) abgestützt sind.

9. Fahrzeugaufbau (1) nach Anspruch 8, **dadurch gekennzeichnet, dass** die Trennwand (11) an einer Hebekonsole gehalten ist, die eine Gelenkvorrichtung aufweist, mit der die Trennwand (11) aus der vertikalen Endbetriebsstellung in ihre im Wesentlichen liegende horizontale Außerbetriebsstellung verschwenkbar ist.

10. Fahrzeugaufbau (1) nach Anspruch 9, **dadurch gekennzeichnet, dass** die Trennwand (11) in ihrer liegenden Horizontalstellung über die Hebekonsole (17) über Führungsrollen (27) in den Führungen (18) des Fahrzeugaufbaus (1) verschiebbar ist.

11. Fahrzeugaufbau (1)nach einem der Ansprüche 1 bis 10, **dadurch gekennzeichnet, dass** die Trennwand (11) in ihrer Außerbetriebsstellung über zumindest eine Magnetvorrichtung haltbar ist.

12. Fahrzeugaufbau (1) nach einem der Ansprüche 9 bis 11, **dadurch gekennzeichnet, dass** die Hebekonsole Rohre (19) mit integrierten Federn aufweist, wobei die zu beiden Seiten der Trennwand (11) vorgesehenen Rohre (19) durch einen Querstabilisator (20) miteinander verbunden sind.

13. Fahrzeugaufbau (1) nach Anspruch 12, **dadurch gekennzeichnet, dass** an den Rohren (19) und/oder dem Querstabilisator Führungsrollen (27) zur Führung der Trennwand (11) in den Führungen (18) des Fahrzeugaufbaus (1) abgestützt sind.

14. Fahrzeugaufbau (1) nach einem der Ansprüche 1 bis 13, **dadurch gekennzeichnet, dass** die Trennwand (11) Handgriffe (16) zum Anheben und/oder Verschwenken der Trennwand (11) aufweist.

15. Fahrzeugaufbau (1) nach einem der Ansprüche 1 bis 14, **dadurch gekennzeichnet, dass** die Trennwand (11) in ihrer Außerbetriebsstellung über betätigbare Sperrelemente (28) arretierbar ist.

16. Fahrzeugaufbau nach Anspruch 15, **dadurch gekennzeichnet, dass** an dem Fahrzeugdach (9) Lochschienen vorgesehen sind, in denen die Sperrelemente (28) verrastbar sind.

## Claims

1. Vehicle body (1) for commercial vehicles, comprising a box-shaped cargo space (10), in particular a cargo space that can be cooled at least in regions, having at least one adjustable partition (11) that is arranged in guides (18) of the vehicle body (1) so as to be longitudinally displaceable within the cargo space and that is pivotable from a substantially horizontally oriented inoperative position into a substantially vertically oriented end operating position pivoting the cargo space (10) into separate cargo-space compartments (10.1, 10.2), the partition (11), when it is in the end operating position, being connected to floor (8) and roof regions (9) and side-wall regions (4) of the vehicle body (1) via sealing elements (26), the partition (11) being pivotable from the inoperative position into an intermediate operating position, from which intermediate operating position said partition can be transferred into the end operating position via at least one pressure body (13), it being possible for the pressure body (13) to be clamped to a floor region (8) or the roof region (9) via power lifts (25), **characterised in that** the partition (11) can be moved, by means of the pressure body (13), from the intermediate operating position comprising a clearance (15) with respect to the floor region (8) or the roof region (9) of the vehicle body (1) into the end operating position closing the clearance (15), the pressure body (13) and the partition (11) being designed so as to be translationally movable relative to one another and the pressure body (13) being connected to the partition (11) by means of levers (14) which each rest against the pressure body (13) at one end and against a brace (22) at the other end, a support (21) being provided between the respective ends, which support defines the pivot axis and is directly or indirectly connected to the partition (11).

2. Vehicle body (1) according to claim 1, **characterised in that** the power lifts (25) are designed as gas pressure dampers or as gas pressure springs.

3. Vehicle body (1) according to claim 1, **characterised in that** the pressure body (13) can be unlocked and locked via a locking bar (12).

4. Vehicle body (1) according to claim 3, **characterised in that** the locking bar (12) is designed as a pivotable locking lever.

5. Vehicle body (1) according to any of claims 1 to 4, **characterised in that** at least one brake element (23) acts on the pressure body (13).

6. Vehicle body (1) according to any of claims 1 to 5, **characterised in that** the partition (11) comprises sealing elements (26) in each case in side regions at least in the end regions facing the roof (9) and/or the floor (8), it being possible to compensate for the relative movement of the partition (11) with respect to the pressure body (13) clamped to the roof (9) or the floor (8) by means of at least one of the sealing elements (26) facing the roof (9) or the floor (8) of the vehicle body (1).

7. Vehicle body (1) according to any of claims 3 to 6, **characterised in that** the locking bar (12) is pivotably guided on a longitudinal rail (13.1, 13.2), on which a roller is guided which enters a locking guide in the locking position and rests against a stop (13.3) in the unlocking position.

8. Vehicle body (1) according to any of claims 1 to 7, **characterised in that** linear guides (24) are provided on the pressure body (13), in which guides the pressure body (13) is guided and which are supported on the partition (11).

9. Vehicle body (1) according to claim 8, **characterised in that** the partition (11) is held on a lifting console which has a hinge device by means of which the partition (11) can be pivoted from the vertical end operating position into its substantially horizontal inoperative position.

10. Vehicle body (1) according to claim 9, **characterised in that** the partition (11) can be displaced, in its horizontal position, into the guides (18) of the vehicle body (1) via the lifting console (17) via guide rollers (27).

11. Vehicle body (1) according to any of claims 1 to 10, **characterised in that** the partition (11) can be held in its inoperative position by means of at least one magnetic device.

12. Vehicle body (1) according to any of claims 9 to 11, **characterised in that** the lifting console has tubes (19) with integrated springs, the tubes (19) provided on both sides of the partition (11) being connected to one another by a transverse stabiliser (20).

13. Vehicle body (1) according to claim 12, **characterised in that** guide rollers (27) for guiding the partition (11) in the guides (18) of the vehicle body (1) are supported on the tubes (19) and/or the transverse stabiliser.

14. Vehicle body (1) according to any of claims 1 to 13, **characterised in that** the partition (11) has handles (16) for lifting and/or pivoting the partition (11).

15. Vehicle body (1) according to any of claims 1 to 14, **characterised in that** the partition (11) can be locked in its inoperative position by means of actuatable locking elements (28).

16. Vehicle body according to claim 15, **characterised in that** perforated rails are provided on the vehicle roof (9), in which rails the locking elements (28) can be locked.

## Revendications

1. Structure de véhicule (1) pour véhicules utilitaires avec un espace de chargement en forme de caisse (10), en particulier un espace de chargement pouvant être au moins partiellement réfrigéré, avec au moins une paroi de séparation réglable (11), qui est agencée dans des guides (18) de la structure de véhicule (1) pouvant être déplacée longitudinalement à l'intérieur de l'espace de chargement et peut pivoter à partir d'une position inactive orientée sensiblement horizontalement vers une position de fonctionnement finale orientée sensiblement verticalement, faisant pivoter l'espace de chargement (10) dans des compartiments d'espace de chargement (10.1, 10.2) séparés l'un de l'autre, dans laquelle dans la position de fonctionnement finale de la paroi de séparation (11), celle-ci est connectée à des zones de plancher (8) et des zones de toit (9) ainsi qu'à des zones de paroi latérale (4) de la structure de véhicule (1) via des éléments d'étanchéité (26), dans laquelle la paroi de séparation (11) peut pivoter à partir d'une position inactive jusque dans une position de fonctionnement intermédiaire, à partir de laquelle elle peut être placée dans la position de fonctionnement finale via au moins un corps de pression (13), dans laquelle le corps de pression (13) peut être serré avec une zone de plancher (8) ou une zone de toit (9) via un élévateur de puissance (25), **caractérisée en ce que** la paroi de séparation (11) peut être déplacée par le corps de pression (13) à partir d'une position de fonctionnement intermédiaire présentant un intervalle (15) par rapport à la zone de plancher (8) ou la zone de toit (9) de la structure de véhicule (1) jusque dans la position de fonctionnement finale fermant l'intervalle (15), dans laquelle le corps de pression (13) et la paroi de séparation (11) sont conçus mobiles en translation l'un par rapport à l'autre et dans laquelle le corps de pression (13) est relié à la paroi de séparation (11) via un levier (14), qui est joint à une première extrémité au corps de pression (13) et à une autre extrémité sur une butée (22), respectivement, dans laquelle un support (21) est prévu entre les extrémités respectives, définissant l'axe de pivotement et étant relié directement ou indirectement à la paroi de séparation (11).

2. Structure de véhicule (1) selon la revendication 1, **caractérisée en ce que** les élévateurs de puissance (25) sont conçus sous la forme d'un amortisseur à gaz ou de ressort à gaz.

3. Structure de véhicule (1) selon la revendication 1, **caractérisée en ce que** le corps de pression (13) peut être déverrouillé et verrouillé via un verrou de sûreté (12).

4. Structure de véhicule (1) selon la revendication 3, **caractérisée en ce que** le verrou de sûreté (12) est conçu sous la forme d'un levier de verrouillage pouvant pivoter.

5. Structure de véhicule (1) selon l'une quelconque des revendications 1 à 4, **caractérisée en ce qu'au** moins un élément de freinage (23) vient en prise au niveau du corps de pression (13).

6. Structure de véhicule (1) selon l'une quelconque des revendications 1 à 5, **caractérisée en ce que** la paroi de séparation (11) présente des éléments d'étanchéité (26) respectivement dans des zones latérales au moins dans les zones frontales faisant face au toit (9) et/ou au plancher (8), dans laquelle le déplacement relatif de la paroi de séparation (11) par rapport au corps de pression (13) serré avec le toit (9) ou le plancher (8) peut être compensé via au moins un des éléments d'étanchéité (26) qui fait face au toit (9) ou au plancher (8) de la structure de véhicule (1).

7. Structure de véhicule (1) selon l'une quelconque des revendications 3 à 6, **caractérisée en ce que** le verrou de sûreté (12) est guidé de manière pivotante sur un rail longitudinal (13.1, 13.2), sur lequel est guidé un galet, qui pénètre dans un guide de verrouillage dans la position de verrouillage et vient en butée contre une butée (13.3) dans la position de déverrouillage.

8. Structure de véhicule (1) selon l'une quelconque des revendications 1 à 7, **caractérisée en ce que** des guides linéaires (24) sont prévus sur le corps de pression (13), dans lesquels le corps de pression (13) est guidé et qui sont supportés sur la paroi de séparation (11).

9. Structure de véhicule (1) selon la revendication 8, **caractérisée en ce que** la paroi de séparation (11) est maintenue sur une console de levage qui présente un dispositif d'articulation, avec lequel la paroi de séparation (11) peut pivoter à partir de la position de fonctionnement finale verticale jusque dans sa position inactive sensiblement horizontale.

10. Structure de véhicule (1) selon la revendication 9, **caractérisée en ce que** la paroi de séparation (11), dans sa position horizontale reposant sur la console de levage (17), est déplaçable par l'intermédiaire de galets de guidage (27) dans les guides (18) de la structure de véhicule (1).

11. Structure de véhicule (1) selon l'une quelconque des revendications 1 à 10, **caractérisée en ce que** la paroi de séparation (11) peut être maintenue dans sa position inactive par l'intermédiaire d'au moins un dispositif magnétique.

12. Structure de véhicule (1) selon l'une quelconque des revendications 9 à 11, **caractérisée en ce que** la console de levage présente des tubes (19) à ressorts intégrés, dans laquelle les tubes (19) prévus de part et d'autre de la paroi de séparation (11) sont reliés les uns aux autres par un stabilisateur transversal (20).

13. Structure de véhicule (1) selon la revendication 12, **caractérisée en ce que** des galets de guidage (27) sont supportés sur les tubes (19) et/ou le stabilisateur transversal, pour guider la paroi de séparation (11) dans les guides (18) de la structure de véhicule (1).

14. Structure de véhicule (1) selon l'une quelconque des revendications 1 à 13, **caractérisée en ce que** la paroi de séparation (11) présente des poignées (16) permettant de soulever et/ou de faire pivoter la paroi de séparation (11).

15. Structure de véhicule (1) selon l'une quelconque des revendications 1 à 14, **caractérisée en ce que** la paroi de séparation (11) peut être arrêtée dans sa position inactive par des éléments de sûreté actionnables (28).

16. Structure de véhicule selon la revendication 15, **caractérisée en ce que** des rails perforés sont prévus sur le toit de véhicule (9), dans lesquels les éléments de sûreté (28) peuvent être encliquetés.
